# EUROPEAN PATENT APPLICATION

(11) **EP 2 093 707 A1**
(43) Date of publication of application: **26.08.2009**
(21) Application number: 09250221.0
(22) Date of filing: 28.01.2009
(51) Int. Cl.: G06Q 30/00

(54) **Data caputre system and method**

(30) Priority: 28.01.2008 GB 0801516
(71) Applicant: Camber Associates Ltd., Sutton Weaver, Cheshire WA7 3EA (GB)
(72) Inventor: Clucas, Steve, Sutton Weaver Cheshire WA7 3EA (GB)
(74) Representative: Jehan, Robert

(57) **Abstract**

A data capture system and method for capturing inputs made at a client system are disclosed. The data capture system 10 is arranged to capture at least selected user inputs inputted into the client system 20 in respect of a session. The data capture system 10 is arranged to monitor said sessions and said captured user inputs and output data on sessions determined to relate to incomplete sessions which have been dormant for a predetermined amount of time.

## Description

### Field of the Invention

The present invention relates to a data capture system and method that is particularly applicable for use in computer systems where a user is interacting with a remote system.

### Background to the Invention

Interactive computer systems today are typically based on a client/server or peer-to-peer architectures. In either case, a user accesses a remote system using a client of some description. The client may be bespoke to the system or it may use a generic platform such as a web browser with or without programming language support from the likes of Java™, silverlight™ or similar. In almost all cases, data is only transmitted from the client to the server or the peer to the other peer upon a user action such as triggering a web post method by clicking on a button.

One particular problem with all interactive computer systems is their complexity. They are often written from, a functional perspective without much thought being given to whether they are intuitive and easy for the end user to use.

In the case of systems offering products or services to an end user such as e-commerce systems, it is often the case that an end user will simply abandon a purchase or order part way through his or her session. This could be because of a problem with the system such as simply not understanding what is being asked or not having the necessary information; it could be because of a system error that means the user simply cannot convince the system to move through to complete the purchase or order; or it may simply be because the user feels it is taking too long to supply the information requested and has become bored.

In all cases, this results in lost business which is a significant concern to product/service providers.

### Statement of Invention

According to an aspect of the present invention, there is provided a data capture system for capturing inputs made at a client system, the data capture system being arranged to capture at least selected user inputs inputted into the client system in respect of a session, wherein the data capture system is arranged to monitor said sessions and said captured user inputs and output data on sessions determined to relate to incomplete sessions which have been dormant for a predetermined amount of time.

The data capture system is preferably remote of the client system.

The inputs are preferably made to a user interface comprising computer program code arranged to execute or be executed at the client system and the data capture system includes a data capture component within said user interface.

The data capture component may include computer program code operable to execute on the client system to monitor user inputs into one or more fields or pages of the user interface and computer program code operable to transmit said user inputs to the data capture system when it is detected that a new field or page is accessed.

The data capture component may include computer program code operable to execute on the client system to monitor user inputs into one or more fields or pages of the user interface and computer program code operable to transmit said user inputs to the data capture system when it is detected that focus is lost from the monitored field or page.

Preferably, the data capture system further comprises a database, the data capture system being arranged to store said captured data and a session identifier for each session.

Preferably, for each session the data capture system is arranged to record a time stamp whenever data is added or updated for the session.

The data capture system may include a monitoring subsystem arranged to monitor said database and output data on sessions having a latest timestamp that is older than the predetermined amount of time.

According to another aspect of the present invention, there is provided a data capture method for capturing inputs made at a client system, the method comprising:
capturing at least selected user inputs inputted into the client system in respect of a session;
monitoring said sessions and said captured user inputs and outputting data on sessions determined to relate to incomplete sessions which have been dormant for a predetermined amount of time.

The method may further comprise:
displaying a user interface to the client system;
operating a data capture component transparently to the user on the client system to capture the at least selected user inputs to the user interface.

The method may further comprise:
operating the data capture component to monitor user inputs into one or more fields or pages of the user interface; and,
operating the data capture component to transmit said user inputs to the data capture system when it is detected that a new field or page is accessed.

The method may further comprise:
operating the data capture component to monitor user inputs into one or more fields or pages of the user interface; and,
operating the data capture component to transmit said user inputs to the data capture system when it is detected that focus is lost from the monitored field or page.

The method may further comprise storing said captured data and a session identifier for each session in a database.

The method may further comprise writing a time stamp in the database for each session whenever data is added or updated for the session.

The method may further comprise monitoring said database and outputting data on sessions having a latest timestamp that is older than the predetermined amount of time.

Embodiments of the present invention seek to provide a system and method in which user sessions with a remote system are monitored and user inputs are captured. If, after a predetermined amount of time, the session is identified as being dormant and the session has not completed (progressed to a sale/purchase/successfully submitted enquiry etc.), the system and method are arranged to provide data such that a separate enquiry to the user can be made in an attempt to assist in the session or complete the enquiry or purchase. This assistance may be automated via a computer or it may include human intervention such as an enquiry manually over the phone etc.

### Brief Description of the Drawings

Embodiments of the present invention will now be described in detail, by way of example only, with reference to the accompanying drawings in which:
Figure 1 is a schematic diagram of a data capture system according to an embodiment of the present invention;
Figure 2a and 2b are flow diagrams illustrating data flow in aspects of the system of Figure 1;
Figure 3 is a screen shot of a first aspect of a user interface according to an embodiment of the present invention;
Figure 4 is a screen shot of another aspect of the user interface of Figure 3; and,

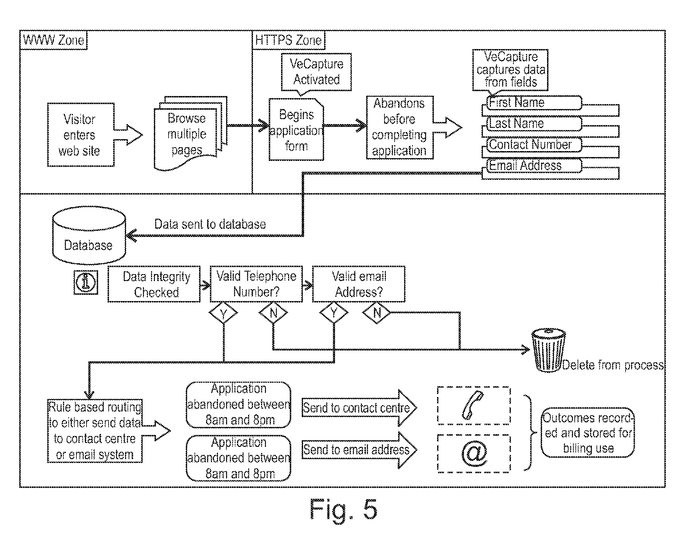

Figure 5 is a schematic diagram of the logical flow of events and data in an embodiment of the present invention.

### Detailed Description

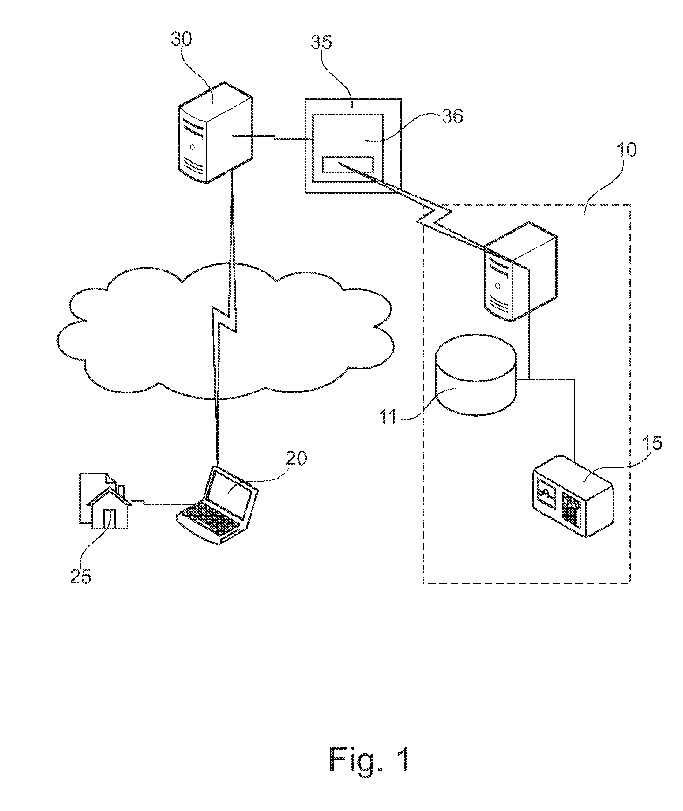

Figure 1 is a schematic diagram of a data capture system according to an embodiment of the present invention.

The data capture system 10 is remote of a client system 20 of a user. The data capture system 10 is also illustrated as being remote of a service provider system 30, although it will be appreciated that the data capture system 10 may be integrated with the service provider system 30. The data capture system 10 is a computer server having a processor and a memory that stores code that executes to implement the certain features that are described below. Likewise the client system 20 and the service provider system 30 are also computer systems having a processor and a memory that stores code that executes to provide the respective functionality described below.

A user establishes a session with the service provider by accessing the service provider system 30 using the client system 20. Typically, this would be by causing the client system 20 to execute code to access a user interface 35 on the service provider's website hosted by the service provider system 30 using a web browser 25 on the client system 20.

The session will depend on the requirements of the service provider and what it is that the user requests. However, it will typically include the service provider system 30 requesting personal data and order/request data from the client system 20 by providing a number of user input boxes or other controls on the user interface 35 that is presented to the user at the client system 20. Code and/or other definition data representing the user interface 35 is downloaded from the service provider system 30 to the client system 20 and executed or interpreted at the client system 20 to cause the user interface 35 to display on an output device at the client system 20.

Inputs made to the user interface 35 in prior systems would not be conveyed to the service provider system 30 until explicitly submitted by the user. However, in embodiments of the present invention, the code or definition data for the user interface also includes code enabling the data capture system 10 to monitor the user interface and capture data as it is inputted into the input boxes or controls by the user. Captured data is stored in a database 11 that is remote of the client system 20. Preferably, a data capture component 36 is included in the code or definition data that is transmitted to the client system 20 alongside the user interface 35. Preferably, the data capture component is executed locally on the client system 20 and causes user input data to be transmitted to the database 11 each time a user moves from one field or page to another within the user interface.

Preferably, the data capture component is an AJAX component that operates transparently to the user and/or the client system 20.

It will be appreciated that data could be captured at the client system 20 or the service provider system 30. If data is captured at the service provider system, this avoids a user's security concerns and is simpler to implement. In such an arrangement, the user interface 35 would ned to be arranged to cause submission or posting of data on a regular basis (as opposed to when the form etc is completed).

The captured data stored in the database is associated with a session identifier which is also stored in the database.

A monitoring subsystem 15 of the data capture system 10 is arranged to monitor captured data in the database 11 and identify session identifiers where the associated data has not changed or has not completed after a certain amount of time has elapsed. The monitoring subsystem is arranged to output data on the identified session identifiers.

It will be appreciated that in the case of a web page, submissions in the form of post operations or the like may still be passed to the service provider system 30. Embodiments of the present invention are transparent to existing processes and do not require changes to data flow. In the case of a completed enquiry or transaction, this will be detected and no further action taken. Only data relating to not yet complete (and therefore also abandoned) enquiries is flagged for pursuit.

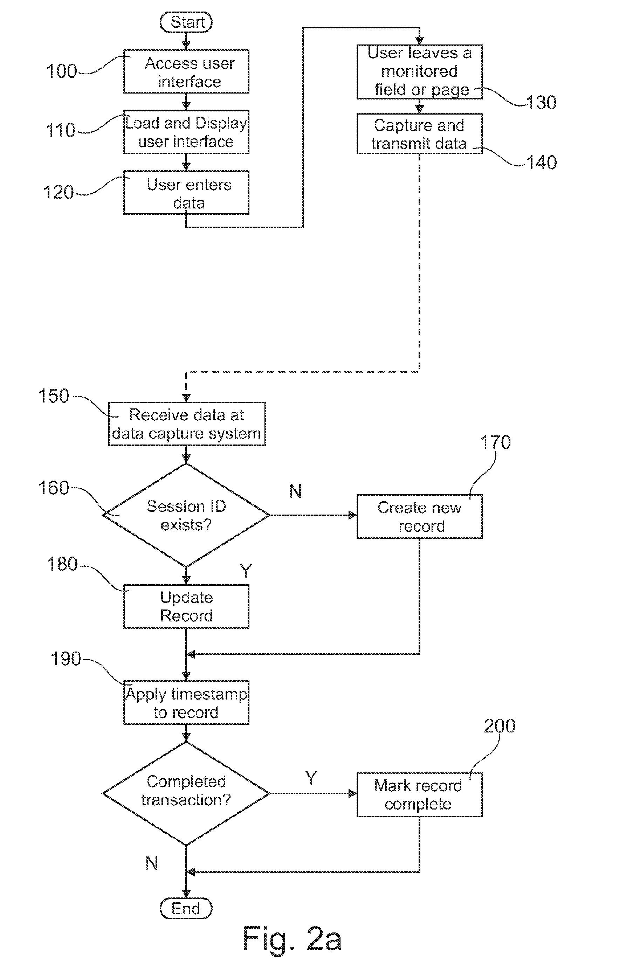

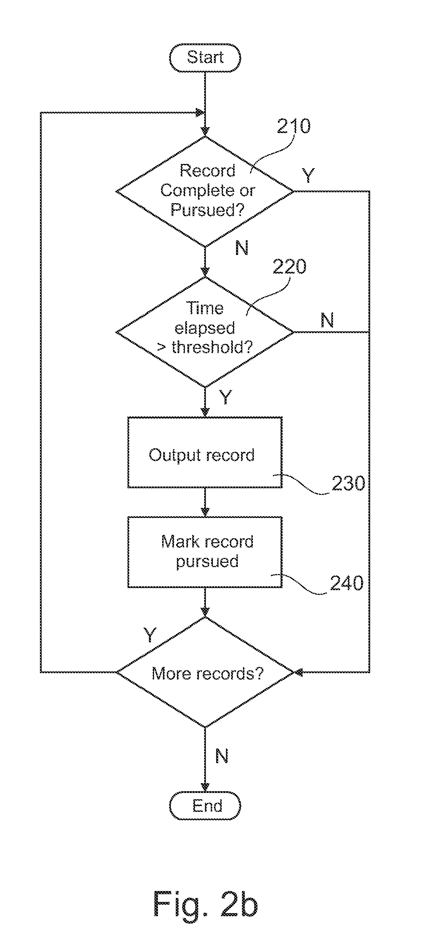

Figures 2a and 2b are flow diagrams illustrating data flow of aspects of the system of Figure 1. Figure 2a illustrates overall data flow of the system of Figure 1. Figure 2b illustrates operation of the data capture system 10 when identifying abandoned sessions to be pursued.

In step 100, a user accesses the user interface 35 hosted by the service provider system 30. In step 110, the user interface 35 is loaded and displayed on the client system 20. In step 120, the user enters data into the user interface 35. In step 130, the user leaves a first field of the user interface 35 that is designated as to be monitored by the data capture system 10. In step 140, data within the first field is captured and transmitted with a session identifier to the data capture system 10 for storage in the database 11.

In step 150, the captured data is received at the data capture system 10 and the session identifier is cross-checked with the database 11 to determine if it already exists in step 160. If the session identifier does not exist then a new record is created in the database in step 170. If the session identifier does exist then the associated record in the database 11 is identified in step 180 and the record is updated with the newly captured data. Preferably, each time a record is created or updated, a time stamp is added to or associated with the record in step 190. If the captured data indicates that an enquiry or purchase has been completed then in step 200 the record in the database is marked as complete.

The loop of Figure 2b is repeated on a periodic basis (this may be continual, hourly, daily, weekly etc). In step 210, records in the database are checked to identify records that are not marked as complete or pursued. For each non-complete record in step 220, where more than a predetermined time period has elapsed since the last time stamp, the record is output in step 230 to a processing centre or system and the record may then be marked as pursued in step 240 (or it may optionally be deleted).

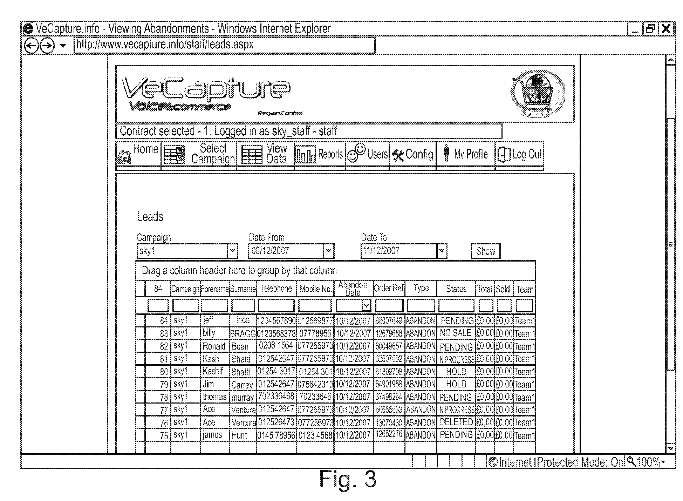

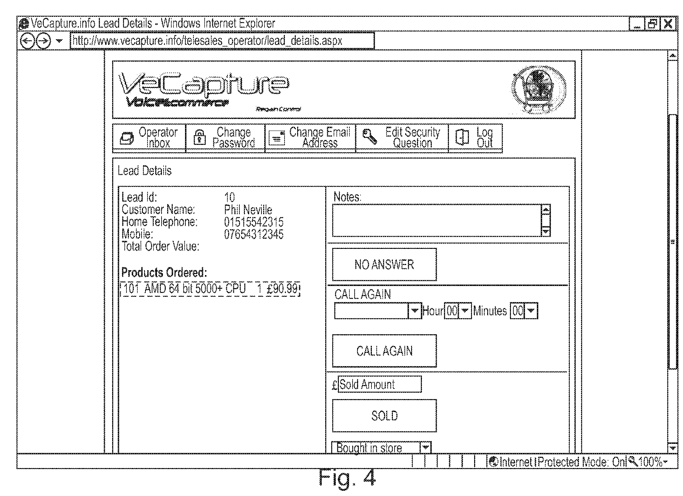

The output data may be made available via a user interface such as that of Figures 3 and 4. Alternatively, it may be communicated to another system such as a contact management system, call centre system or the like so that leads can be followed up in real-time or near real-time.

Preferably, embodiments of the present invention seek to capture:
- Customer name
- Contact Numbers
- Product details selected for purchase
- Price
- Point of abandonment

As such, even if the customer cannot be persuaded (or even contacted) to complete the order or enquiry, a business is provided with information about what was considered for purchased (so competitors prices can be checked etc) and potential snagging points within its web interface. It will be appreciated that as well as being unobtrusive to the existing website or the like which is being monitored, embodiments of the present invention are not limited by operating system or other technologies and could be implemented in many different ways on different operating systems.

In a preferred embodiment, the data capture system 10 includes a component that captures e-commerce shopping baskets in a folder on a web server and sends them via SSL and an ASP.NET web service on another server for compilation and storage in a database.

The database preferably holds information for different customers, allowing viewing of data, analysis, reports, and call centre management functions.

## Claims

1. A data capture system for capturing inputs made at a client system, the data capture system being arranged to capture at least selected user inputs inputted into the client system in respect of a session, wherein the data capture system is arranged to monitor said sessions and said captured user inputs and output data on sessions determined to relate to incomplete sessions which have been dormant for a predetermined amount of time.

2. A data capture system according to claim 1, wherein the data capture system is remote of the client system.

3. A data capture system according to claim 1 or 2, wherein the inputs are made to a user interface comprising computer program code arranged to execute or be executed at the client system and the data capture system includes a data capture component within said user interface.

4. A data capture system according to claim 1, 2 or 3, wherein the data capture component comprises computer program code operable to execute on the client system to monitor user inputs into one or more fields or pages of the user interface and computer program code operable to transmit said user inputs to the data capture system when it is detected that a new field or page is accessed.

5. A data capture system according to any preceding claim, wherein the data capture component comprises computer program code operable to execute on the client system to monitor user inputs into one or more fields or pages of the user interface and computer program code operable to transmit said user inputs to the data capture system when it is detected that focus is lost from the monitored field or page.

6. A data capture system according to any preceding claim, further comprising a database, the data capture system being arranged to store said captured data and a session identifier for each session.

7. A data capture system according to claim 6, wherein for each session the data capture system is arranged to record a time stamp whenever data is added or updated for the session.

8. A data capture system according to claim 7, wherein the data capture system includes a monitoring subsystem arranged to monitor said database and output data on sessions having a latest timestamp that is older than the predetermined amount of time.

9. A data capture method for capturing inputs made at a client system, the method comprising:
capturing at least selected user inputs inputted into the client system in respect of a session;
monitoring said sessions and said captured user inputs and outputting data on sessions determined to relate to incomplete sessions which have been dormant for a predetermined amount of time.

10. A data capture method according to claim 9, further comprising:
displaying a user interface to the client system;
operating a data capture component transparently to the user on the client system to capture the at least selected user inputs to the user interface.

11. A data capture method according to claim 10, further comprising:
operating the data capture component to monitor user inputs into one or more fields or pages of the user interface; and,
operating the data capture component to transmit said user inputs to the data capture system when it is detected that a new field or page is accessed.

12. A data capture method according to claim 10 or 11, further comprising:
operating the data capture component to monitor user inputs into one or more fields or pages of the user interface; and,
operating the data capture component to transmit said user inputs to the data capture system when it is detected that focus is lost from the monitored field or page.

13. A data capture method according to any of claims 9 to 12, further comprising storing said captured data and a session identifier for each session in a database.

14. A data capture method according to claim 13, further comprising writing a time stamp in the database for each session whenever data is added or updated for the session.

15. A data capture method according to claim 14, further comprising monitoring said database and outputting data on sessions having a latest timestamp that is older than the predetermined amount of time.
